# EUROPEAN PATENT SPECIFICATION

(11) **EP 1 776 906 B1**
(45) Date of publication and mention of the grant of the patent: **13.08.2008**
(21) Application number: 06122650.2
(22) Date of filing: 20.10.2006
(51) Int. Cl.: A47J 31/44

(54) **Coffee espresso machine**
Kaffee-Espressomaschine
Machine à café espresso

(30) Priority: 20.10.2005 IT TO20050745
(43) Date of publication of application: 25.04.2007
(73) Proprietor: RANCILIO MACCHINE PER CAFFE' S.p.A., I-20010 Villastanza di Parabiago (Milano) (IT)
(72) Inventor: Carbonini, Carlo Rancilio Macchine per Caffe'S.P.A, 20010 Villastanza di Parabiago (MI) (IT); Montesano, Elia Rancilio Macchine per Caffe'S.P.A., 20010 Villastanza di Parabiago (MI) (IT)
(74) Representative: Robba, Pierpaolo

(56) References cited:
- EP-A2- 0 313 496

## Description

### Technical Field

The present invention relates to an espresso coffee machine. More particularly, the invention relates to an espresso coffee machine, of either professional or domestic type, comprising an electronic control unit and a display associated therewith.

### Background Art

Espresso coffee machines generally include at least a steam boiler, a water pressurising device, valves, electric and hydraulic controls and one ore more coffee supplying groups, assembled within an external structure or casing. In the most recent espresso coffee machines, an electronic control unit is further provided for controlling and managing the operation of the above components. Said electronic control unit can, for instance, control and adjust the boiler temperature, the water pressure in the pressurising device, the espresso coffee supplying time, etc.

Said control unit may be equipped with a display through which the operator is informed of the operating conditions of the espresso coffee machine.

For instance, US 4,551,611 discloses an espresso coffee machine having a control system including a temperature transducer applied to the machine boiler, a control and storage unit receiving in input the temperature value detected by the transducer, and a display associated with said control and storage unit for allowing the operator to know the temperature values and hence the pressure values of water inside the boiler.

Similarly, EP 313,496 discloses an espresso coffee machine having a control panel including a set of control pushbuttons for each espresso coffee supplying group and an alphanumerical display which can display date, time, boiler temperature and pressure, pressure in the water delivery system and similar information.

The main problem associated with the use of displays in espresso coffee machines concerns the display positioning inside the machine.

It is self-evident that such display ought to be positioned so that it can be immediately viewed by the user from different positions and under different angles. Thus, it would be advisable to position said display in the upper portion of the front wall of the espresso coffee machine casing, preferably in central position.

Yet, such a positioning is disadvantageous due to the temperature and humidity conditions existing in such area of the espresso coffee machine, which are unfavourable for the operation of an electronic device. Should the display be positioned in the upper portion of the casing front wall, it would be just above the espresso coffee supplying groups and the steam supplying nozzles and, during the machine operation, it would be almost constantly hit by a column of hot and humid air.

Under high humidity and temperature conditions, the display would quickly undergo damages and failures.

In the prior art coffee machines, said problem is solved by positioning the display in a different position, for instance near the machine base (as shown for instance in the aforementioned US 4,551,611).

Yet, such a solution has a clear disadvantage, in that the information appearing on the display can be seen only from a short distance.
Alternatively, it is possible to locate the display in the upper portion of the front wall of the casing, where it can be easily seen, and to use temperature- and humidity-resistant materials for its manufacture. Yet, such materials generally are very expensive and entail a considerable increase in the overall cost of the coffee machine.

### Disclosure of the Invention

It is an object of the present invention to overcome the above drawbacks, by providing an espresso coffee machine having a display that is of simple and cheap manufacture and that can be easily seen by the user from different positions and under different angles, and not only from short distance.

The above and other objects are achieved by the espresso coffee machine as claimed in the appended claims.

Thanks to the provision of an optical device capable of forming an image of the display in a plane different from that of the display surface, said image can be reproduced in the desired location, independently of the physical location of the display.

Said optical device may include for instance a lens, a plate or a prism.

More particularly, it is possible to reproduce said image close to the surface of the front panel of the espresso coffee machine casing, while keeping the display in a suitable position, in particular a position shifted backwards relative to the front panel surface, where the temperature and humidity conditions are more favourable for its correct operation.
Advantageously, said optical device is of simple and cheap manufacture and thus it does not add to the overall cost of the coffee machine.

### Brief Description of Drawings

The above and other advantages of the invention will become more apparent from the detailed description of some preferred embodiments thereof, given hereinafter by way of non-limiting examples, with reference to the accompanying drawings, in which:
- Fig. 1 is perspective view of an exemplary embodiment of the espresso coffee machine according to the invention;
- Fig. 2 is a side view of the espresso coffee machine of Fig. 1;
- Fig. 3 is a part sectional view of the espresso coffee machine of Fig. 1, schematically showing the visualisation device according to a first preferred embodiment of the invention;
- Fig. 4 is a part sectional view of the espresso coffee machine of Fig. 1, schematically showing the visualisation device according to a second preferred embodiment of the invention;
- Fig. 5 is a part sectional view of the espresso coffee machine of Fig. 1, schematically showing the visualisation device according to a third preferred embodiment of the invention;
- Fig. 6 is a block diagram schematically showing the control system of the espresso coffee machine of Fig. 1.

### Best mode for Carrying Out the Invention

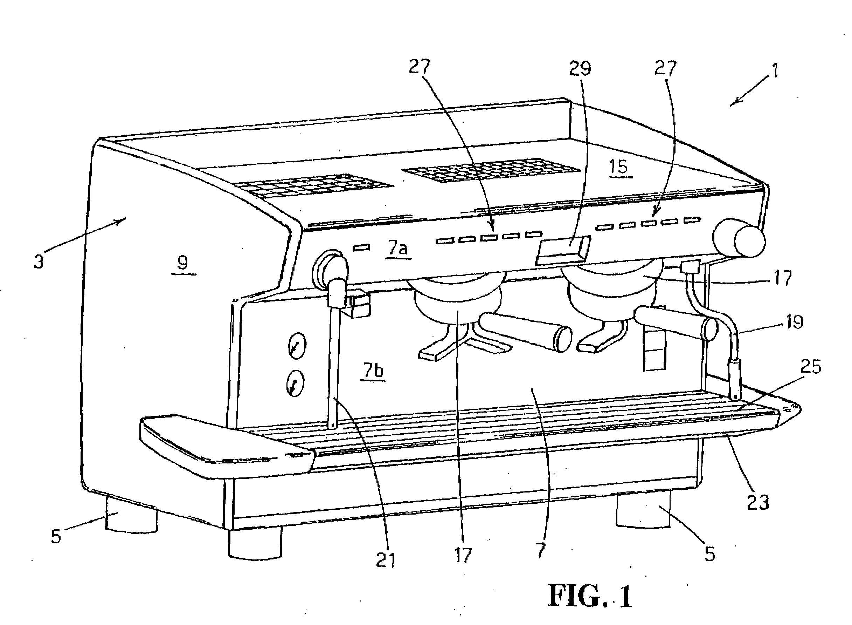

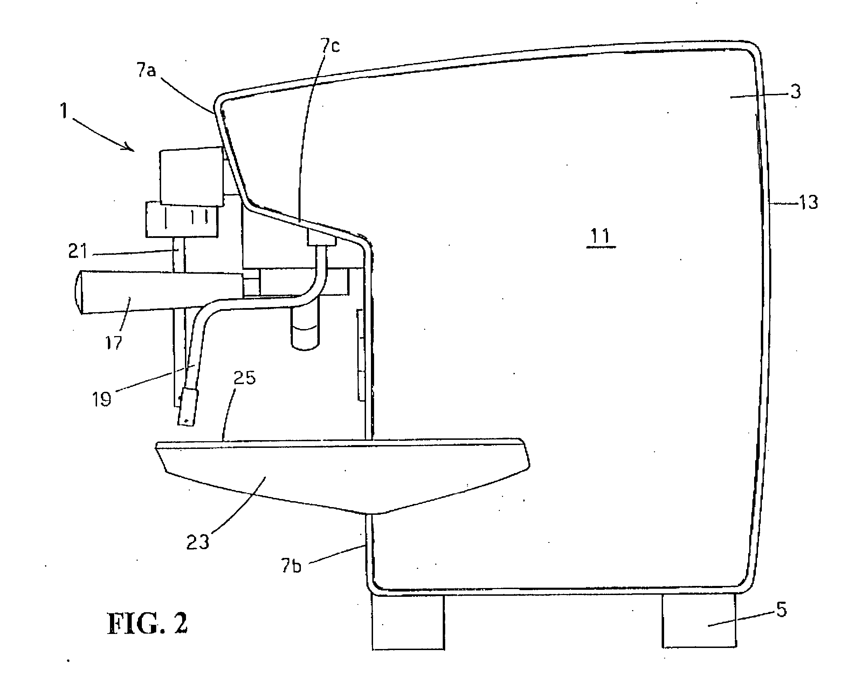

Referring to Figs. 1 and 2, an espresso coffee machine 1 is shown. Said machine 1 comprises a casing 3 mounted on feet 5 and substantially consisting of a front panel 7, a pair of side panels 9, 11, a rear panel 13 and a top panel 15.

Said casing 3 internally houses the main components of machine 1, including a steam boiler, a water pressurising device and one or more coffee supplying groups (two in the illustrated example).

Front panel 7 of casing 3 has a projecting upper portion 7a and a lower portion 7b arranged more backwards, which portions are connected by a plane 7c bearing the hydraulic connections for filter-bearing groups 17 of the espresso coffee supplying groups and for a steam supplying nozzle 19. A second steam-supplying nozzle 21 comes out from upper portion 7a of front panel 7.

A tank 23 for liquid collection, covered at its top by a grid 25, is applied to front panel 7, below filter-bearing groups 17 and nozzles 19, 21.

Two control push-button sets 27, one for each espresso coffee supplying group, are provided on upper portion 7a of front panel 7.

According to the invention, a visualisation device 29 is further provided on upper portion 7a of front panel 7, which device is preferably centrally located, between the pair of push-button sets 27. Said visualisation device is therefore located at an optimal position so as it can be seen by the operator from different positions and under different angles.

According to the invention, the visualisation device 29 essentially comprises a display associated with the electronic control unit of machine 1 (to be described below) and an optical device associated therewith and capable of forming an image of said display in a plane different from that of the display surface.

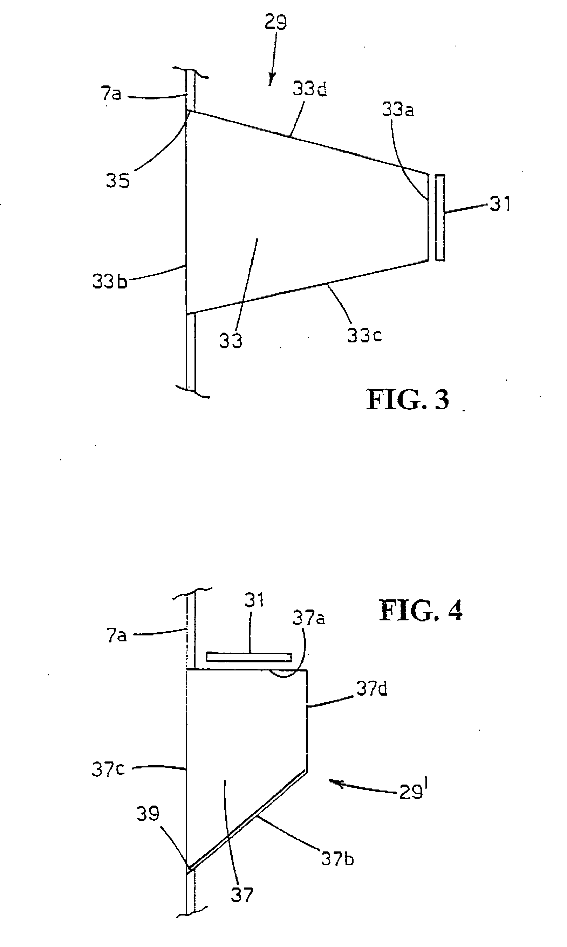

Fig. 3 schematically shows the visualisation device 29 according to a first preferred embodiment of the invention.

Said visualisation device 29 essentially comprises a display 31, for instance a liquid crystal or a LED display, and an optical device associated therewith and including a lens 33.

An opening 35 is formed in upper portion 7a of front panel 7 and display 31 is positioned inside that opening, in a position shifted backwards relative to said front panel. According to said first embodiment, display 31 lies in a plane substantially parallel to the plane of front panel 7. The spacing between the plane of display 31 and the plane of front panel 7 is preferably of some centimetres, for instance about 40 mm, to ensure that display 31 is located in a position sufficiently shifted backwards relative to front panel 7.

Lens 33 also is provided inside opening 35. The lens is located between display 31 and the surface of panel 7 and has a first planar face 33a facing the surface of display 31 and an opposite second face 33b, which is arranged so as to intercept an optical ray coming from said first face and is substantially flush with the surface of front panel 7a.

Thanks to lens 33, the image appearing on display 31 can be reproduced on a plane different from the plane of the surface of display 31, closer to front panel 7 than display 31. Thus, the image can be easily seen from different positions and under different angles, even though display 31 is located at a distance from front panel 7, in an area of the espresso coffee machine 1 where less unfavourable temperature and humidity conditions exist.

Preferably, faces 33c, 33d of lens 33 other than said first and second faces 33a, 33b are opaque or darkened, so as to optimise reading of the image and to hinder the view of the internal components of machine 1.

Fig. 4 schematically shows visualisation device 29' according to a second preferred embodiment of the invention.

In that second embodiment too visualisation device 29' essentially comprises a display 31 and a lens 37, both located in correspondence with an opening 39 formed in upper portion 7a of front panel 7. However, in said second embodiment, display 31 lies in a plane substantially perpendicular to the plane of front panel 7.

Lens 37 has a first planar face 37a facing the surface of display 31, a second, reflecting face 37b inclined relative to said first face 37a by such an angle that it reflects an optical ray coming from said first face in a direction substantially perpendicular to the incidence direction, and a third face 37c, which is substantially perpendicular to said first face 37a, is arranged so as to intercept an optical ray coming from said second face 37b and is substantially flush with the surface of front panel 7. The spacings between the plane of display 31 and the second, reflecting face 37b, and between said reflecting face 37b and face 37c are preferably of some centimetres, for instance about 40 mm and 20 mm, respectively, to ensure that display 31 is located in a position sufficiently spaced apart from front panel 7.

In this way, the image appearing on display 31 can be reproduced on a plane different from the plane of the surface of display 31, closer to front panel 7 than display 31, and it can be easily seen outside the machine from several positions and under several angles, even though display 31 is located so that it is not exposed to the air at high temperature and humidity coming from below.

In this case too, faces 37d of said lens 37, other than said first, second and third faces 37a to 37c, are preferably opaque or darkened, for reasons similar to those discussed above in connection with the first embodiment.

It is to be noted that, in order to take into account the mirroring effect of reflecting surface 37b of lens 37, it is necessary that an image specular to the image to be seen through face 37c of lens 37 is formed on display 31.

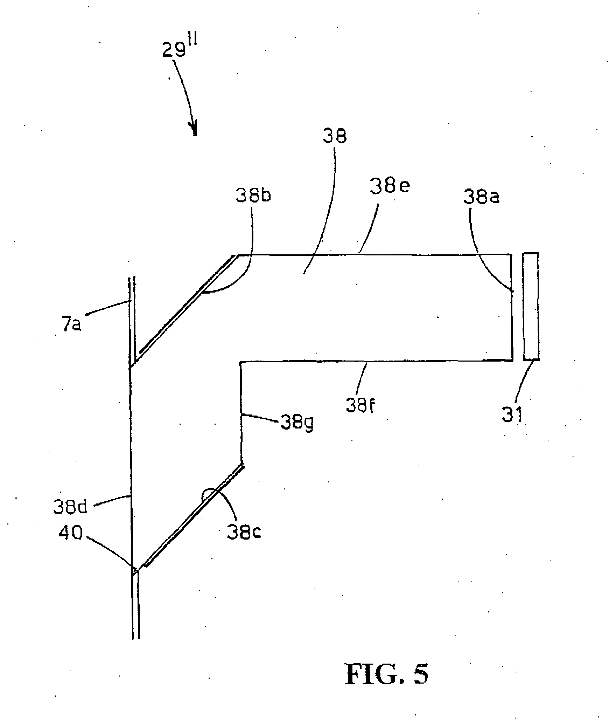

In the alternative, it is possible to adopt a configuration like that shown in Fig. 5, which shows a third preferred embodiment of the invention.

In that third embodiment too visualisation device 29" essentially comprises a display 31 and a lens 38, located both in correspondence with an opening 40 formed in upper portion 7a of front panel 7.

Display 31 lies in a plane substantially parallel to the surface of said upper portion of front panel 7, in a position shifted backwards and off-axis relative to opening 40.

Lens 38 has: a first planar face 38a facing the surface of display 31; a second, reflecting face 38b inclined relative to said first face 38a by such an angle that it reflects an optical ray coming from display 31 in a direction substantially perpendicular to the incidence direction; a third face 38c, it too reflecting, which is arranged so as to intercept an optical ray coming from second face 38b and is inclined relative to said second face 38b by such an angle that it reflects an optical ray in a direction perpendicular to the incidence direction, that is in a direction substantially parallel to the initial direction; and a fourth face 38d, which is substantially parallel to said first face 38a, is arranged so as to intercept an optical ray coming from said third face 38c and is substantially flush with the surface of front panel 7.

The spacings between the plane display 31 and the second, reflecting face 38b, between said reflecting face 38b and face 38c and between said face 38c and the plane of front panel 7 are preferably of some centimetres, for instance about 40 mm, 30 mm and 20 mm, respectively, to ensure that display 31 is located in a position sufficiently spaced apart from and shifted backwards relative to front panel 7.

In this way, the image appearing on display 31 can be seen outside the machine from several positions and under several angles. Moreover, thanks to the provision of two reflecting surfaces 38b, 38c in lens 38, the mirroring effect will be compensated and the exact image of display 31 can be seen through face 38d of said lens 38.

In this case too, faces 38e, 38f, 38g of lens 38, different from said first, second, third and fourth faces 38a to 38d, are preferably opaque or darkened, for reasons similar to those discussed above in connection with the other embodiments.

It is to be noted that, in all embodiments described above, lens 33, 37, 38 used in the visualisation device can be made of any material with a refractive index greater than air, preferably glass, polycarbonate or metacrylate and derivatives thereof.

Moreover, even if in the embodiments described above the optical device includes a lens, the device could even include a plate or a prism, depending on the positioning of display 31 and the result to be obtained.

It is clear from the above description that the invention attains the intended aims, in that it allows displaying the information appearing on the display on a plane different from that of the display surface and spaced apart from such plane, and thus also in positions where temperature and humidity conditions unfavourable for the operation of electronic devices exist, independently of the location and the orientation of said display.

It is also clear that it is possible to use locations and orientations of the visualisation device and the optical device associated therewith other than the described ones, without departing from the scope of the present invention as defined in the appended claims.

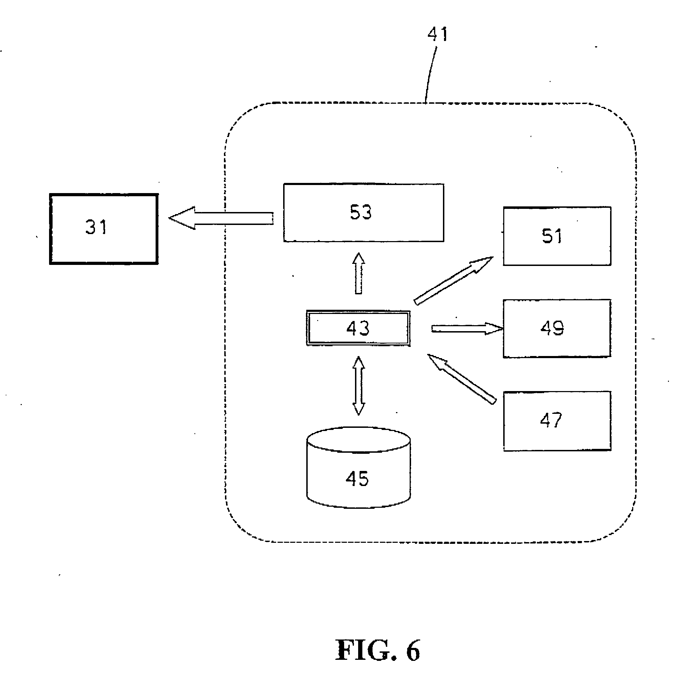

In order to highlight the importance of a correct display of the information appearing on display 31, Fig. 6 schematically shows the control system of espresso coffee machine 1.

Said control system substantially comprises an electronic control unit 41 including a processing unit 43 and a memory and data storage unit 45, associated with each other.

Processing unit 43 is connected on the one side to an interface unit 47, through which it receives, for instance, pressure and temperature values or data relevant to the commands inputted by the operator through the control pushbutton sets, and on the other side to a unit 49 managing the "power" outputs, through which the processing unit is connected for instance to the devices adjusting the temperature and the pressure of the boiler and the pressurising group, and to a unit 51 managing the "logic" outputs through which the processing unit is connected for instance to the integrated circuits of the other electric components of the machine.

Processing unit 43 is further connected to a logic unit 53 managing information visualisation and controlling display 31.

Through logic unit 53, therefore, the information processed by processing unit 43 is reproduced on display 31. More particularly, during normal operation, display 31 will show to the operator information such as date, time, boiler temperature, pressure inside the pressurising group, state of the espresso coffee supply, etc.

The provision of display 31 is further particularly advantageous in case of maintenance interventions, since display 31 acts in this case as an interface between electronic control unit 41 and the technician, allowing the latter to see, through suitable menus, the information relevant to the state of the machine and of the machine components in order to detect the causes of failures or wrong operations.

## Claims

1. Espresso coffee machine (1) comprising a casing (3) internally housing electric and hydraulic devices for espresso coffee supply, said machine comprising an electronic control unit (41) equipped with a visualisation device (29; 29'; 29"), wherein said visualisation device (29; 29'; 29") comprises a display. (31), associated with said electronic control unit (41), **characterized in that** said visualisation device further comprises an optical device (33; 37; 38) arranged for forming an image of said display (31) on a plane different from that of the surface of said display (31).

2. Espresso coffee machine (1) as claimed in claim 1, wherein said casing (3) comprises a front panel (7), a pair of side panels (9, 11), a rear panel (13) and a top panel (15).

3. Espresso coffee machine (1) as claimed in claim 2, wherein said visualisation device (29; 29'; 29") is located in an opening (35; 39; 40) formed in the upper portion (7a) of said front panel (7) of said casing (3).

4. Espresso coffee machine (1) as claimed in claim 3, wherein said opening (35; 39; 40) is centrally formed in said upper portion (7a) of said panel (7).

5. Espresso coffee machine (1) as claimed in any one of claims 1 to 4, wherein said optical device comprises at least a lens (33) or a prism or a plate.

6. Espresso coffee machine (1) as claimed in claim 5, wherein said lens (33) comprises a first planar face (33a) facing the surface of said display (31), and a second face (33b) of said lens (33), opposite and substantially parallel to said first face (33a) and arranged so as to intercept an optical ray coming from said first face.

7. Espresso coffee machine (1) as claimed in claim 6, wherein faces of said lens (33) other than said first and second faces (33a, 33b) of said lens are opaque or darkened.

8. Espresso coffee machine (1) as claimed in claims 3 and 6, wherein said display (31) is arranged substantially parallel to the surface of said front panel (7) and said lens (33) is positioned between said display (31) and the surface of said front panel (7), said second face (33b) of said lens (33) being substantially flush with the surface of said front panel (7).

9. Espresso coffee machine (1) as claimed in claim 5, wherein said lens (37) has a first planar face (37a) facing the surface of said display (31), a second, reflecting face (37b), inclined relative to said first face (37a) by such an angle that it reflects an optical ray coming from said first face in a direction substantially perpendicular to the incidence direction, and a third face (37c), substantially perpendicular to said first face (37a) and arranged so as to intercept an optical ray coming from said second face.

10. Espresso coffee machine (1) as claimed in claim 9, wherein faces of said lens (37), other than said first and third faces (37a, 37c) of said lens (37), are opaque or darkened.

11. Espresso coffee machine (1) as claimed in claims 3 and 9, wherein said display (31) is arranged substantially perpendicular to the surface of said front panel (7) and said lens (37) is positioned between said display (31) and the surface of said front panel (7), said third face (37c) of said lens (37) being substantially flush with the surface of said front panel (7).

12. Espresso coffee machine (1) as claimed in claim 5, wherein said lens (38) comprises: a first planar face (38a) facing the surface of said display (31); a second, reflecting face (38b) inclined relative to said first face (38a) by such an angle that it reflects an optical ray coming from said display (31) in a direction substantially perpendicular to the incidence direction; a third reflecting face (38c), which is arranged so as to intercept an optical ray coming from said second face (38b) of said lens (38) and is inclined relative to said second face (38b) by such an angle that it reflects said optical ray coming from said second face (38b) in a direction substantially perpendicular to the incidence direction, and a fourth face (38d) of said lens (38), which is substantially parallel to said first face (38a) and is arranged so as to intercept an optical ray coming from said third face.

13. Espresso coffee machine (1) as claimed in claim 12, wherein faces of said lens (38), other than said first and fourth faces (38a, 38d) of said lens (38), are opaque or darkened.

14. Espresso coffee machine (1) as claimed in claims 3 and 12, wherein said display (31) is arranged substantially parallel to the surface of said front panel (7) and said lens (38) is positioned between said display (31) and the surface of said front panel (7), said fourth face (38b) of said lens (38) being substantially flush with the surface of said front panel (7).

15. Espresso coffee machine (1) as claimed in any one of claims 5 to 14, wherein said lens (33, 37, 38) is made of a material with a refractive index greater than that of air, and more particularly of a material chosen out of glass, polycarbonate and metacrylate and derivatives thereof.

16. Espresso coffee machine (1) as claimed in any preceding claim, wherein said display (31) is a liquid crystal display.

## Patentansprüche

1. Espresso-Kaffeemaschine (1) mit einem Gehäuse (3), in dessen Innerem elektrische und hydraulische Einrichtungen zur Bereitstellung von Espressokaffee untergebracht sind, wobei die Maschine eine mit einer bildgebenden Einrichtung (29; 29'; 29") ausgestattete elektronische Steuereinheit (41) aufweist, wobei die bildgebende Einrichtung (29; 29'; 29") ein mit der elektronischen Steuereinheit (41) verknüpftes Display (31) aufweist,
**dadurch gekennzeichnet, dass** die bildgebende Einrichtung außerdem eine optische Einrichtung (33; 37; 38) aufweist, die zum Bildaufbau auf dem Display (31) auf einer von der Displayoberfläche (31) unterschiedlichen Ebene angeordnet ist.

2. Espresso-Kaffeemaschine (1) nach Anspruch 1,
wobei das Gehäuse (3) eine Frontplatte (7), ein Paar Seitenplatten (9, 11) eine Rückwand (13) und eine Deckplatte (15) umfasst.

3. Espresso-Kaffeemaschine (1) nach Anspruch 2,
wobei die bildgebende Einrichtung (29; 29'; 29") in einer im oberen Bereich (7a) der Frontplatte (7) des Gehäuses (3) ausgebildeten Öffnung (35; 39; 40) untergebracht ist.

4. Espresso-Kaffeemaschine (1) nach Anspruch 3,
wobei die Öffnung (35; 39; 40) zentral im oberen Bereich (7a) der Platte (7) eingerichtet ist.

5. Espresso-Kaffeemaschine (1) nach einem der vorhergehenden Ansprüche 1 bis 4,
wobei die optische Einrichtung mindestens eine Linse (33) oder ein Prisma oder eine Platte aufweist.

6. Espresso-Kaffeemaschine (1) nach Anspruch 5,
wobei die Linse (33) eine erste, der Displayoberfläche (31) gegenüberliegende Planfläche (33a) aufweist, sowie eine zweite Fläche (33b) der Linse (33), die zu der ersten Fläche (33a) im Wesentlichen parallel liegt, ihr gegenüberliegt und so angeordnet ist, dass sie einen von der ersten Fläche kommenden optischen Strahl unterbricht.

7. Espresso-Kaffeemaschine (1) nach Anspruch 6,
wobei die Flächen der Linse (33) im Unterschied zu den ersten und zweiten Flächen (33a, 33b) der Linse undurchsichtig oder abgedunkelt sind.

8. Espresso-Kaffeemaschine (1) nach Anspruch 3 und 6,
wobei das Display (31) im Wesentlichen parallel zur Oberfläche der Frontplatte (7) angeordnet ist und die Linse (33) zwischen dem Display (31) und der Oberfläche der Frontplatte (7) platziert ist, wobei die zweite Fläche (33b) der Linse (33) im Wesentlichen bündig mit der Oberfläche der Frontplatte (7) ist.

9. Espresso-Kaffeemaschine (1) nach Anspruch 5,
wobei die Linse (37) eine erste, dem Display (31) gegenüberliegende Planfläche (37a) aufweist, sowie eine zweite, reflektierende Fläche (37b), die relativ zur ersten Fläche (37a) in einem solchen Winkel geneigt ist, dass sie einen von der ersten Fläche kommenden optischen Strahl in eine im Wesentlichen senkrechte Richtung zur Einfallsrichtung reflektiert, sowie eine zur ersten Fläche (37a) im Wesentlichen senkrechte dritte Fläche (37c), die so angeordnet ist, dass sie einen von der zweiten Fläche kommenden optischen Strahl auffängt.

10. Espresso-Kaffeemaschine (1) nach Anspruch 9,
wobei die Flächen der Linse (37) im Unterschied zu den ersten und dritten Flächen (37a, 37c) der Linse (37) undurchsichtig oder abgedunkelt sind.

11. Espresso-Kaffeemaschine (1) nach Anspruch 3 und 9,
wobei das Display (31) im Wesentlichen senkrecht zur Oberfläche der Frontplatte (7) angeordnet ist und die Linse (37) zwischen dem Display (31) und der Oberfläche der Frontplatte (7) platziert ist und die dritte Fläche (37c) der Linse (37) im Wesentlichen bündig mit der Oberfläche der Frontplatte (7) ist.

12. Espresso-Kaffeemaschine (1) nach Anspruch 5,
wobei die Linse (38) Folgendes umfasst: eine erste, der Oberfläche des Displays (31) gegenüberliegende Planfläche (38a); eine zweite, reflektierende Fläche (38b), die relativ zur ersten Fläche (38a) in einem solchen Winkel geneigt ist, dass sie einen von dem Display (31) ausgehenden optischen Strahl in eine im Wesentlichen zur Einfallsrichtung senkrechte Richtung reflektiert; eine dritte reflektierende Fläche (38c), die so angeordnet ist, dass sie einen von der zweiten Fläche (38b) der Linse (38) ausgehenden optischen Strahl auffängt und relativ zur zweiten Fläche (38b) in einem solchen Winkel geneigt ist, dass sie einen von der zweiten Fläche (38b) kommenden optischen Strahl in eine zur Einfallsrichtung im Wesentlichen senkrechte Richtung reflektiert, sowie eine vierte Fläche (38d) der Linse (38), die zur ersten Fläche (38a) im Wesentlichen parallel und derart angeordnet ist, dass sie einen von der dritten Fläche auftreffenden optischen Strahl auffängt.

13. Espresso-Kaffeemaschine (1) nach Anspruch 12,
wobei die Flächen der Linse (38) anders als die ersten und vierten Flächen (38a, 38d) der Linse (38) undurchsichtig oder abgedunkelt sind.

14. Espresso-Kaffeemaschine (1) nach den Ansprüchen 3 und 12,
wobei das Display (31) im Wesentlichen parallel zur Oberfläche der Frontplatte (7) angeordnet ist und die Linse (38) zwischen dem Display (31) und der Oberfläche der Frontplatte (7) platziert ist und die vierte Fläche (38b) der Linse (38) im Wesentlichen bündig mit der Oberfläche der Frontplatte (7) ist.

15. Espresso-Kaffeemaschine (1) nach einem der vorhergehenden Ansprüche 5 bis 14,
wobei die Linse (33, 37, 38) aus einem Material mit einem Brechungsindex größer als der von Luft hergestellt ist, insbesondere aus einem Werkstoff, der aus Glas, Polykarbonat und Methacrylat und ihren Derivaten ausgewählt wird.

16. Espresso-Kaffeemaschine (1) nach einem der vorhergehenden Ansprüche,
wobei das Display (31) ein Flüssigkristalldisplay ist.

## Revendications

1. Machine à café espresso (1) comprenant un boîtier (3) logeant en lui des dispositifs hydrauliques et électriques destinés à fournir le café espresso, ladite machine comportant une unité de commande électronique (41) équipé d'un dispositif de visualisation (29 ; 29'; 29"), dans laquelle ledit dispositif de visualisation (29; 29'; 29") comprend un dispositif d'affichage (31) associé à ladite unité de commande électronique (41), **caractérisée en ce que** ledit dispositif de visualisation comporte, de plus, un dispositif optique (33 ; 37 ; 38) disposé pour former une image dudit affichage (31) sur un plan différent de celui de la surface dudit affichage (31).

2. Machine à café espresso (1) selon la revendication 1, dans laquelle ledit boîtier (3) comprend un panneau avant (7), une paire de panneaux latéraux (9, 11), un panneau arrière (13) et un panneau de dessus (15).

3. Machine à café espresso (1) selon la revendication 2, dans laquelle ledit dispositif de visualisation (29 ; 29'; 29") est placé dans une ouverture (35 ; 39 ; 40) formée dans la partie supérieure (7a) dudit panneau avant (7) dudit boîtier (3).

4. Machine à café espresso (1) selon la revendication 3, dans laquelle ladite ouverture (35 ; 39 ; 40) est formée au centre de ladite partie supérieure (7a) dudit panneau (7).

5. Machine à café espresso (1) selon l'une quelconque des revendications 1 à 4, dans laquelle ledit dispositif optique comprend au moins une lentille (33) ou un prisme ou une plaque.

6. Machine à café espresso (1) selon la revendication 5, dans laquelle ladite lentille (33) comprend une première face plane (33a) faisant face à la surface dudit affichage (31), et une seconde face (33b) de ladite lentille (33), opposée et essentiellement parallèle à ladite première face (33a) et disposée de façon à intercepter un rayon optique venant de ladite première face.

7. Machine à café espresso (1) selon la revendication 6, dans laquelle les faces de ladite lentille (33) autres que lesdites première et deuxième faces (33a, 33b) de ladite lentille sont opaques ou obscurcies.

8. Machine à café espresso (1) selon les revendications 3 et 6, dans laquelle ledit affichage (31) est agencé de façon essentiellement parallèle à la surface dudit panneau avant (7) et ladite lentille (33) est positionnée entre ledit affichage (31) et la surface dudit panneau avant (7), ladite seconde face (33b) de ladite lentille (33) étant essentiellement de niveau avec la surface dudit panneau avant (7).

9. Machine à café espresso (1) selon la revendication 5, dans laquelle ladite lentille (37) possède une première face plane (37a) faisant face à la surface dudit affichage (31), une deuxième face de réflexion (37b), inclinée par rapport à ladite première face (37a) suivant un angle tel qu'elle réfléchit un rayon optique venant de ladite première face dans une direction essentiellement perpendiculaire à la direction d'incidence, et une troisième face (37c) essentiellement perpendiculaire à ladite première face (37a) et agencée de façon à intercepter un rayon optique venant de ladite deuxième face.

10. Machine à café espresso (1) selon la revendication 9, dans laquelle les faces de ladite lentille (37), autres que lesdites première et troisième faces (37a, 37c) de ladite lentille (37), sont opaques ou obscurcies.

11. Machine à café espresso (1) selon les revendications 3 et 9, dans laquelle ledit affichage (31) est disposé de façon essentiellement perpendiculaire à la surface dudit panneau avant (7) et ladite lentille (37) est positionnée entre ledit affichage (31) et la surface dudit panneau avant (7), ladite troisième face (37c) de ladite lentille (37) étant essentiellement de niveau avec la surface dudit panneau avant (7).

12. Machine à café espresso (1) selon la revendication 5, dans laquelle ladite lentille (38) comprend une première face plane (38a) faisant face à la surface dudit affichage (31) ; une deuxième face de réflexion (38b) inclinée par rapport à ladite première face (38a) suivant un angle tel qu'elle réfléchit un rayon optique venant dudit affichage (31) dans une direction essentiellement perpendiculaire à la direction d'incidence ; une troisième face de réflexion (33c) qui est disposée de façon à intercepter un rayon optique venant de ladite deuxième face (38b) de ladite lentille (38) et qui est inclinée par rapport à ladite deuxième face (38b) suivant un angle tel qu'elle réfléchit ledit rayon optique venant de ladite deuxième face (38b) dans une direction essentiellement perpendiculaire à la direction d'incidence, et une quatrième face (38d) de ladite lentille (38), laquelle est essentiellement parallèle à ladite première face (38a) et est disposée de façon à intercepter un rayon optique venant de ladite troisième face.

13. Machine à café espresso (1) selon la revendication 12, dans laquelle les faces de ladite lentille (38) autres que lesdites première et quatrième faces (38a, 38d) de ladite lentille (38), sont opaques ou obscurcies.

14. Machine à café espresso (1) selon les revendications 3 et 12, dans laquelle ledit affichage (31) est disposé de façon essentiellement parallèle à la surface dudit panneau avant (7) et ladite lentille (38) est positionnée entre ledit affichage (31) et la surface dudit panneau avant (7), ladite quatrième face (38b) de ladite lentille (38) étant essentiellement de niveau avec la surface dudit panneau avant (7).

15. Machine à café espresso (1) selon l'une quelconque des revendications 5 à 14, dans laquelle ladite lentille (33, 37, 38) est constituée d'un matériau ayant un indice de réfraction plus grand que celui de l'air, et plus particulièrement d'un matériau choisi en dehors du verre, du polycarbonate et du méthacrylate et de leurs dérivés.

16. Machine à café espresso (1) selon l'une quelconque des revendications précédentes, dans laquelle ledit affichage (31) est un affichage à cristaux liquide.
